# EUROPÄISCHE PATENTSCHRIFT

(11) **EP 0 492 414 B1**
(45) Veröffentlichungstag und Bekanntmachung des Hinweises auf die Patenterteilung: **22.11.1995**
(21) Anmeldenummer: 91121736.2
(22) Anmeldetag: 18.12.1991
(51) Int. Cl.: B23K 9/10

(54) **Stromquelle und Verfahren zur Steuerung einer Stromquelle**
Power source and method for controlling this source
Source de courant ainsi que méthode de commande

(30) Priorität: 21.12.1990 DE 4041448
(43) Veröffentlichungstag der Anmeldung: 01.07.1992
(73) Patentinhaber: KUKA Schweissanlagen & Roboter GmbH, D-86165 Augsburg (DE)
(72) Erfinder: Mazac, Karel, W-8900 Augsburg (DE)
(74) Vertreter: Ernicke, Hans-Dieter, Dipl.-Ing.

(56) Entgegenhaltungen:
- EP-A- 0 237 861
- PATENT ABSTRACTS OF JAPAN vol. 10, no. 33 (M-452)8. Februar 1986 &JP-A-60 187 470 (HITACHI SEIKO KK) 24 SEPTEMBER 1985
- PATENT ABSTRACTS OF JAPAN vol. 6, no. 150 (M-148)10. August 1982 &JP-A-57 068 272 (MATSUSHITA ELECTRIC IND CO LTD ) 26 April 1982

## Beschreibung

Die Erfindung betrifft eine Stromquelle, insbesondere eine Schweißstromquelle sowie ein Verfahren zu deren Steuerung mit den Merkmalen des Verfahrens- und Vorrichtungshauptanspruches.

Eine solche Stromquelle nebst Steuerung ist aus der JP-A-60187470 bekannt. Sie hat zum Ziel, die Welligkeit der Ausgangsspannung der Stromquelle zu eliminieren. Dies betrifft nur den Leerlaufbetrieb und den Ladezustand mit der Ausgangsspannung Vₒ. Für die Beseitigung der Welligkeit ist nur eine sehr kleine Änderung der Frequenz der Eingangsspannung erforderlich, die sich nicht in einer signifikanten Änderung der Ausgangsstromhöhe äußert. Die bekannte Steuerung kann und will daher nicht die Höhe des Ausgangsstroms beeinflussen.

Aus der JP-A-57068272 ist eine Einrichtung zum Pulsschweißen bekannt, die dem Haupttransformator nachgeschaltet ist. Bei dieser Vorrichtung ist jegliche Stromsteuerung durch eine Frequenzänderung ausgeschlossen. In diesem Fall bliebe nämlich der Mittelwert des Stromes bei jeder Frequenzänderung konstant.

Beim Schweißen, insbesondere beim Lichtbogenschweißen, ist es häufig erforderlich, mit unterschiedlich hohen Schweißströmen zu arbeiten. In manchen Anwendungsbereichen, beispielsweise dem Schweißen rohrförmiger Bauteile mit einem magnetisch bewegten umlaufenden Lichtbogen (Magnetarc-Schweißen), bedarf es ferner eines Stromprogrammes zur zeitabhängigen Einstellung unterschiedlicher Stromhöhen während des Schweißvorganges. Aus der DE-A-3 215 806 ist es zu diesem Zweck bekannt, mehrere Schweißstromquellen parallel anzuordnen und je nach gewünschter Stromhöhe in der hierfür erforderlichen Kombination selektiv zu schalten. Dies bedingt einen gewissen Bauaufwand. Der gewünschte Schweißstrom läßt sich dabei auch nicht stufenlos einstellen, wobei außerdem Spannungsänderungen auf der Ausgangsseite der Schweißstromquelle auftreten.

Aus der DE-A-3 113 671 ist ferner noch eine Schweißstromquelle bekannt, bei der ausgangsseitig ein pulsierender Strom erzeugt wird. Hierzu sind an die Sekundärwicklungen des Transformators Thyristoren angeschlossen, die einen gleichgerichteten Grundstrom mit überlagerten Impulsspitzen mit einstellbarer Frequenz erzeugen. Ein solcher pulsierender Schweißstrom ist für manche Schweißverfahren, beispielsweise MIG/MAG-Schweißen geeignet. Die Amplitude des Stroms wird in der Phase zur Erzeugung von Grund- und Impulsstrom unterschiedlich angeschnitten.

Es ist daher Aufgabe der vorliegenden Erfindung, eine Möglichkeit zur besseren Steuerung des Ausgangsstromes einer Stromquelle, insbesondere einer Schweißstromquelle, aufzuzeigen.

Die Erfindung löst diese Aufgabe mit den Merkmalen im Verfahrens- und Vorrichtungshauptanspruch. Durch die Frequenzmodulation der primärseitigen Eingangsspannung am Transformator kann der sekundärseitige Ausgangsstrom in seiner Höhe unmittelbar und sehr exakt gesteuert werden. Die Traforeaktanz ist nämlich der Frequenz annähernd direkt proportional. Mit einer niedrigen Frequenz wird ein hoher Ausgangsstrom und umgekehrt mit einer hohen Frequenz ein niedriger Ausgangsstrom eingestellt. Damit ist eine direkte Leistungssteuerung bei schwingkreisfreien Verbrauchern möglich. Der gewünschte Wert für die Stromhöhe kann mit dem erfindungsgemäßen Verfahren vor dem Betrieb eingestellt und während des Betriebs verändert werden.

Die Stromquelle und das Verfahren zur Steuerung einer Stromquelle sind für beliebige technische Anwendungsbereiche einsetzbar. Bevorzugt wird der Einsatz als Schweißstromquelle. Eine besondere Eignung besteht hierbei für das Lichtbogenschweißen, beispielsweise Magnetarc-Schweißen mit magnetisch bewegtem umlaufendem Lichtbogen, MIG/MAG-Schweißen, WIG-Schweißen, Stabelektroden-Schweißen etc.. Es kommen aber auch beliebige andere Schweißverfahren in Betracht.

Die erfindungsgemäße Stromquelle ist universal und läßt sich an die verschiedenen Einsatzzwecke, insbesondere die unterschiedlichen Schweißverfahren und deren Erfordernisse anpassen. Dies erfolgt zum einen durch die erfindungsgemäße Steuerung und geeignete Parameterwahl. Damit können die Kennlinien gezielt verändert werden, z.B. in ihrer Neigung. Durch geeignete Trafowahl lassen sich ferner die Grundformen der Kennlinien für die verschiedenen Aufgabenbereiche einstellen, z.B. fallende U/I-Kennlinien, Konstantspannungs-Kennlinien etc.. Die Transformatoren können in weiten Grenzen variieren, indem sie z.B. ein- oder mehrphasig, in Stern oder Dreieck etc. geschalten sind. Mit einem Grundtyp von Schweißstromquelle können somit in den unterschiedlichen Schweißverfahren qualitativ hochwertige Schweißungen durchgeführt werden.

Bei der Steuerung des Ausgangsstroms bleibt die Leerlaufspannung auf der Sekundärseite im wesentlichen konstant. Dies ist für unter anderem für Schweißaufgaben, speziell Lichtbogenschweißen, von besonderem Vorteil. Die Schweißstromquelle zeigt einen für das Lichtbogenverhalten günstigen Kennlinienverlauf.

Die Frequenzmodulation erlaubt je nach Trafocharakteristik und Kennlinienverhalten eine einfache und stufenlose Ansteuerung des Ausgangs- oder Schweißstroms über einen großen Einstellbereich bei einem im wesentlichen linearen Verhalten. Es lassen sich auch Rampen fahren. Ein solches sogenanntes slope-up- oder slope-down-Verhalten kann beim Lichtbogenschweißen in der Kurzschlußphase die Leistungsaufnahme gegenüber dem Stand der Technik deutlich verringern. Außerdem wird die Lichtbogenstabilität bei Stromveränderungen wesentlich erhöht. Alternativ kann die Frequenzmodulation auch in Stufen erfolgen.

Weitere Verbesserungen in der Stromquellencharakteristik betreffen die Blindleistungsaufnahme, die durch einen günstigeren Kennlinienverlauf und eine geringere Welligkeit des Ausgangsstroms gesenkt werden kann. Damit wird ein höherer Leistungsfaktor gegenüber vorbekannten Stromquellen erzielt. So können auch die Kabelanschlüsse, Netzsicherungen, Schalter und sonstige strombelasteten Bauteile geringer dimensioniert werden.

Die erfindungsgemäße Stromquelle mit dem zugehörigen Steuerungsverfahren bietet gegenüber vorbekannten Verfahren und Geräten weitere Vorteile einer kompakten, platzsparenden Bauweise bei besonders kostensparender und damit wirtschaftlicher Ausführung. Ferner kann ein für bekannte Stromquellen manchmal erforderlicher zusätzlicher Netzregler entfallen, da die Netzkompensation hier stets in der Steuerung erfolgen kann. Die Netzkompensation ist dabei auch wesentlich genauer. Die Kompensation kann auch auf direktem Wege durch Überwachung und Konstantregelung des Ausgangs- oder Schweißstroms erfolgen. Gegenüber mehrteiligen Schweißstromquellen ergibt sich im weiteren der Vorteil einer geringeren Anzahl von Ein- und Ausgängen.

Die erfindungsgemäße Stromquelle kann ferngesteuert werden, was für alle Anwendungsbereiche möglich ist. Hierzu kann extern oder intern eine freiprogrammierbare Steuerung, vorzugsweise mit einem Microprozessor, vorgesehen sein. Die Flexibilität der Stromquelle, insbesondere der Schweißstromquelle, bringt eine besondere Eignung für vollautomatische Fertigungslinien und die schnelle Anpassung an wechselnde Schweißaufgaben mit sich.

Zusätzlich zur Frequenzmodulation kann ebenfalls primärseitig und vorzugsweise in der gleichen Schaltung die Pulsbreite verändert werden. Dies kann bei verschiedenen Schutzgas-Schweißverfahren wünschenswert sein. Durch Pulsbreitenmodulation läßt sich der Mittelwert der Spannung variieren und damit die Spannungs/Strom-Kennlinie verschieben. Die Frequenzmodulation erlaubt dagegen eine Neigungsverstellung dieser Kennlinien. Der Spannungsabfall ist über die gewählte Frequenz bzw. den gewählten Strom veränderbar.

Es ergibt sich damit eine optimale Anpassungsfähigkeit der erfindungsgemäßen Schweißstromquelle. Bei einer harten Kennlinien-Einstellung ist für besondere Schweißaufgaben ein Pulsen (Grundstrom mit überlagerten Impulsen) möglich. Dies kann über die erfindungsgemäße Steuerung oder eine Zusatzeinrichtung geschehen. Andererseits läßt sich das im allgemeinen ohne Pulsen ablaufende MIG/MAG-Schweißen wegen der einstellbaren Weichheit der erfindungsgemäßen Schweißstromquelle optimal durchführen. Herkömmliche Schweißstromquelle konnten wegen ihrer starren Kennlinien nicht beides in gleicher Qualität.

Das erfindungsgemäße Verfahren mit der Frequenzmodulation der Primärspannung läßt sich auf unterschiedliche Weise durchführen, wobei der Umrichter entsprechend unterschiedlich gestaltet ist. Unter einem Umrichter wird im Sinne der Erfindung jede steuerbare Vorrichtung zur Frequenzmodulation verstanden.

Beispielsweise kann ein vorgegebener Wechselstrom ohne vorherige Gleichrichtung in seiner Frequenz direkt moduliert werden. Der Umrichter kann hierzu als steuerbarer Generator oder dgl. ausgebildet sein. Im bevorzugten Ausführungsbeispiel werden jedoch Netzspannung und -strom erst gleichgerichtet und dann mit einem steuerbaren Wechselrichter wieder in Wechselstrom umgeformt, wobei die Frequenz und gegebenfalls auch die Pulsbreite moduliert werden. Der Wechselrichter ist vorzugsweise als Transistorschalter ausgebildet, kann aber auch ein Thyristorschalter oder dgl. sein.

Bei der erfindungsgemäßen Stromquelle steht sekundärseitig ein steuerbarer Wechselstrom zur Verfügung, der gegebenenfalls entsprechend des Einsatzzweckes der Stromquelle noch gleichgerichtet werden kann. Damit kann z.B. wahlweise mit Wechselstrom oder mit Gleichstrom geschweißt werden.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Fig. 1:: den schematischen Schaltplan einer Stromquelle, speziell einer Schweißstromquelle,
- Fig. 2:: das zugehörige fallende Kennlinienfeld für eine Ausgangschakteristik der Schweißstromquelle,
- Fig. 3:: ein Stromprogramm zum Magnetarc-Schweißen mit einem magnetisch bewegten umlaufenden Lichtbogen und
- Fig. 4 - 6:: spezielle Kennlinienfelder für Schutzgas-Schweißstromquellen

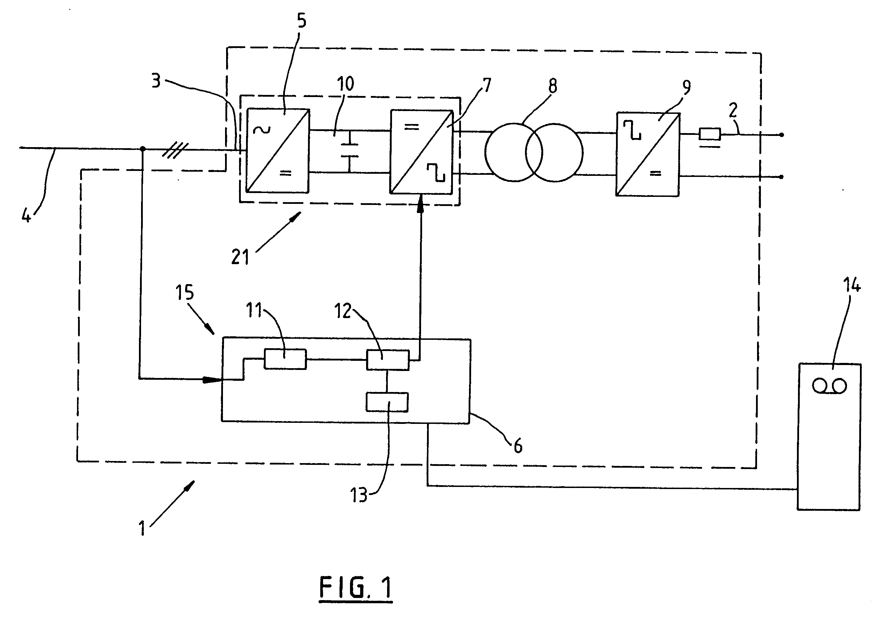

Fig. 1 zeigt im Schemaschaltplan eine Stromquelle, speziell eine Schweißstromquelle (1), die zum Lichtbogenschweißen vorgesehen ist, aber auch für andere Schweißverfahren geeignet ist. Im beschriebenen Ausführungsbeispiel der Fig. 1 bis 3 wird sie für das Magnetarc-Schweißen mit einem magnetisch bewegten, umlaufenden Lichtbogen herangezogen.

Die Schweißstromquelle (1) besitzt einen Transformator (8), dem primärseitig ein steuerbarer Umrichter (21) vorgeschaltet sind. Im gezeigten Ausführungsbeispiel besteht der Umrichter (21) aus einem Gleichrichter (5) und einem steuerbaren Wechselrichter (7).

Auf der Sekundärseite ist wahlweise ein weiterer Gleichrichter (9) nachgeschaltet. Am Eingang (3) ist die Schweißstromquelle (1) mit einem dreiphasigen Drehstromnetz verbunden. Über den Gleichrichter (5) wird der Drehstrom gleichgerichtet. Durch einen Glättungskondensator (10) kann der Gleichstrom geglättet werden. Im nachfolgenden steuerbaren Wechselrichter (7) wird der Gleichstrom wieder zu einem Wechselstrom mit variabler Frequenz und ggf. auch variabler Pulsbreite umgeformt. Der Wechselrichter (7) ist mit einer entsprechenden elektronischen Steuerung (6) verbunden, die ihn Wechselstromimpulse in der gewünschten Frequenz und ggf. auch Breite erzeugen läßt. Die Impulsform ist wählbar und kann z.B. ein Rechteck, Sinus oder dgl. sein.

Der erzeugte Wechselstrom wird über den Transformator (8) transformiert, im nachgeschalteten Gleichrichter (9) wieder zu Gleichstrom umgeformt und den Klemmen am Ausgang (2) der Schweißstromquelle (1) zugeführt. Am Ausgang (2) ist ein schwingkreisfreier Verbraucher, z.B. ein Schweißwerkzeug angeschlossen. Bei schwingkreisfreien Verbrauchern können Resonanzprobleme unberücksichtigt bleiben.

Der Transformator (8) ist im gezeigten Ausführungsbeispiel einphasig. In anderen Ausführungsformen kann er auch mehrphasig und dabei unterschiedlich, z.B. in Stern oder Dreieck, geschaltet sein. Dies richtet sich nach dem Einsatzzweck der Stromquelle (1), der erforderlichen Leistung, der Welligkeit etc..

Die Steuerung der Höhe des sekundärseitigen Ausgangsstroms oder Schweißstroms erfolgt durch Frequenzmodulation der Eingangsspannung auf der Primärseite des Transformators (8). Die Reaktanz des Transformators (8) ist von der Frequenz abhängig und zu dieser vor allem bei Sinusverlauf direkt proportional. Die Impedanz des Transformators (8), die für den Strom bestimmend ist, errechnet sich als Summe der Reaktanz und des ohmschen Widerstands. Je nach Höhe des ohmschen Widerstands ist damit auch die Impedanz ab gewissen Frequenzhöhen im wesentlichen proportional zur Frequenz.

Mit einer niedrigen Frequenz kann ein hoher Sekundärstrom und umgekehrt mit einer hohen Frequenz ein niedriger Sekundärstrom eingestellt werden. Im gezeigten Ausführungsbeispiel erfolgt die Frequenzmodulation durch die Steuerung (6) und den Wechselrichter (7).

In Abwandlung des Ausführungsbeispiels kann der Umrichter (21) auch anders ausgebildet sein, bzw. die Frequenzmodulation auf andere Weise erfolgen. Der Umrichter (21) kann z.B. als steuerbarer Generator ausgebildet sein, der direkt auf der Primärseite einen Wechselstrom bzw. eine Wechselspannung mit der gewünschten Frequenz erzeugt.

In Fig. 1 ist ein dreiphasiges Netz (4) vorgesehen. Der Wechselrichter hat eine Stellbreite des Frequenzbereichs von beispielsweise 500 bis 50 Hz. Daraus ergibt sich bei im wesentlichen direkter Proportionalität von Strom und Frequenz eine Stellbreite des Ausgangsstroms von ca. 1:10. Der Frequenzbereich und die Stellbreite des Stroms können aber auch beliebig anders gewählt werden.

Unabhängig von der Frequenz bleibt die Leerlaufspannung konstant, wobei die Höhe der Leerlaufspannung den Bedürfnissen des kleinsten Stromes angepaßt ist. Sie ist dann über den gesamten Regelbereich ausreichend hoch, um Lichtbogenabrisse zu verhindern. Dies ist z.B. für das Schweißen mit magnetisch bewegtem Lichtbogen besonders wichtig.

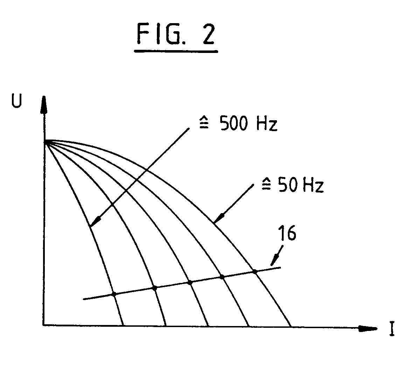

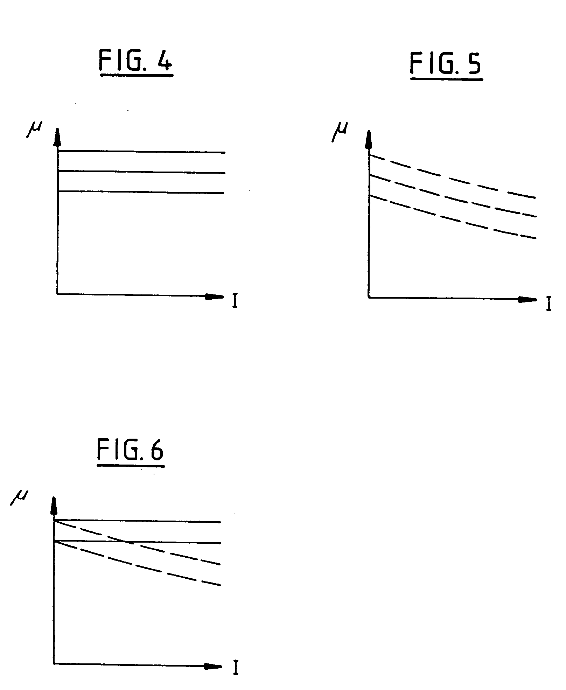

Fig. 2 zeigt hierfür das entsprechende U/I-Kennlinienfeld mit fallenden Kennlinien, das auch für andere Schweißverfahren, z.B. WIG-Schweißen geeignet ist. Die Kennliniengrundform hängt unter anderem von der Trafokonstruktion ab und kann entsprechend durch Gerätewahl variiert werden. Fig. 4 bis 6 zeigen andere Kennlinien für Konstant-Spannung, wie sie z.B. für das Schutzgasschweißen Verwendung finden.

Der Wechselrichter (7) ist als Transistorschalter ausgebildet. Die Steuerung (6) kann die Leitspannung stufenlos, schnell und exakt zur Modulation der in den Transformator (8) eingespeisten Wechselstromfrequenz verändern. Der Einstellbereich der Frequenzmodulation ist dem faktischen Verhalten des Ausgangs- oder Schweißstroms angepaßt und beispielsweise linear. Linearitätsabweichungen in der Übertragungscharakteristik des Transformators können als Kennwerte in der Steuerung (6) abgelegt und kompensiert werden.

Der Ausgangsstrom kann in geeigneter Weise überwacht werden (nicht dargestellt). Zum einen läßt sich hierdurch eine Stromregelung mit Frequenzanpassung durchführen. Andererseits kann die Stromüberwachung auch für die Prozeßsteuerung herangezogen werden.

Die Steuerung (6) dient auch zum Ausgleich von Schwankungen im Netz (4). Hierzu ist in der gezeigten Ausführungsform eine Netzkompensation (15) vom Netz (4) auf die Steuerung (6) geschaltet. In der Steuerung ist eine Überwachungs- und Kompensationsschaltung (11) vorgesehen, die diese Erscheinungen ausgleicht und damit den Ausgangsstrom mittelbar konstant hält. Alternativ kann auch die vorerwähnte direkte Stromregelung vorgenommen werden.

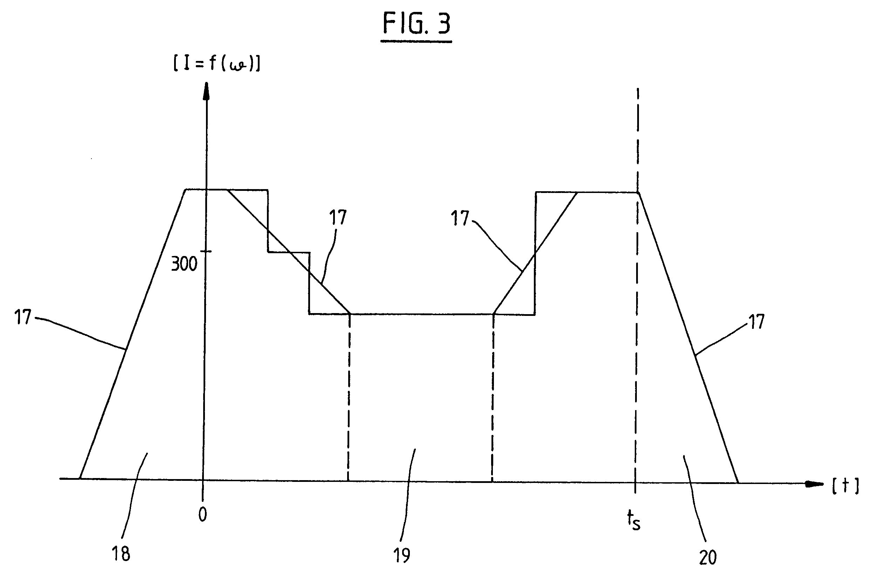

Die Steuerung (6) ist vorzugsweise als frei programmierbare Steuerung ausgebildet. Sie besitzt dazu einen Mikroprozessor (12) mit einem Programmspeicher (13). Im Programmspeicher (13) kann ein Stromprogramm abgelegt sein, wie es beispielsweise in Fig. 3 für das Magnetarc-Schweißen dargestellt ist. Es lassen sich aber auch andere Prozeßabläufe in der Steuerung (6) ablegen, die beim Schweißen dann automatisch abgefahren werden. Alternativ oder zusätzlich kann die Steuerung (6) auch mit einer übergeordneten Prozeßsteuerung (14) verbunden sein. Dies ist beispielsweise beim Eingliedern der Schweißstromquelle (1) in eine automatische Fertigung und eine Fertigungsstraße der Fall.

Das in Fig. 3 dargestellte Stromprogramm dient zum Magnetarc-Schweißen. Es gliedert sich in mehrere Bereiche. Im anfänglichen Kurzschlußbereich (18) haben die beiden zu verschweißenden Teile, meistens Rohre, noch Kontakt miteinander. Vor Beginn des eigentlichen Schweißvorganges wird die Schweißstromquelle (1) bereits eingeschaltet. Der zeitliche Vorlauf beträgt ca. 500 msek. Durch die Steuerung (6) entsprechend eingestellt, steigt der Schweißstrom in einer schrägen Rampe (17) auf einen dem Zündstrom entsprechenden Kurzschlußwert an.

Sobald der gewünschte Kurzschlußstrom erreicht ist, bewegen sich die beiden zu verschweißenden Bauteile auseinander, wobei im entstehenden Spalt der Lichtbogen gezündet wird. Durch die Kontaktunterbrechung würde der Strom absinken. Mit einer Frequenzkorrektur läßt sich dies kompensieren. Durch die Rampe (17) und die Frequenzregelung beim Abheben kann der Energieverbrauch reduziert werden.

Der Transformator (8) wirkt als ein induktiver Energiespeicher, wobei die Energiereserve durch Bindleistungsaufnahme gewährleistet ist.

Wie aus der Kennlinie von Fig. 2 ersichtlich, steigt bei fallendem Strom die Spannung bei der Schweißstromquelle (1) schnell bis zum Erreichen eines Arbeitspunktes (16) an. Fig. 2 gibt hier verschiedene Kennlinien für die Frequenzbereiche zwischen 50 und 500 Hz an. Alle Kennlinien laufen auf die gleiche Leerlaufspannung zu.

Zurückkommend auf das Stromprogramm von Fig. 3 wird der Kurzschlußstrom im ersten Bereich (18) über eine Frequenz von z.B. 120 Hz eingestellt. Bei der Zeit t = 0 im Moment des Abhebens der beiden zu verschweißenden Bauteile wird die Frequenz auf 100 Hz zurückgeschaltet, um den kurzfristigen, abhebebedingten Stromabfall sofort zu kompensieren. Im Stromverlauf ergibt sich damit über die Zeit t = 0 hinweg eine gerade horizontale Linie.

Anschließend folgt die bekannte Anlaufphase beim Magnetarc-Schweißen, in der der Strom stufenweise verringert wird. Die stufenlose Frequenzmodulation ermöglicht es alternativ auch, eine schräge Rampe (17) zu fahren. Dieses für die Lichtbogenstabilität günstige Rampenfahren wird als slope-down-Verlauf bezeichnet. Im Bereich (19), wo die zu verschweißenden Bauteile getrennt sind, schließt sich an die Anlaufphase eine Erwärmungsphase mit einem relativ niedrigen Grundstrom und z.B. 500 Hz an. Danach steigt in der Aufschmelzphase der Strom wieder in einer Stufe oder einer schrägen Rampe (17), dem sog. slope-up-Verlauf, an. Bei der Zeit tₛ werden die zu verschweißenden Bauteile wieder aufeinanderzubewegt und unter Druck gestaucht. Hierbei bleibt die Stromquelle über den dritten Bereich (20) hinweg noch ca. 500 msek. eingeschaltet, wobei der Schweißstrom in einem neuerlichen slope-down-Verlauf wieder auf "0" abfällt.

In der gezeigten Ausführungsform der Schweißstromquelle (1) steht am Ausgang (2) eine gleichgerichtete Schweißspannung von z.B. 100 V an, wobei der Schweißstrom zwischen 100 A und 1000 A durch die Frequenzmodulation einstellbar ist.

Für den beschriebenen Frequenzbereich zwischen 50 und 500 Hz genügt ein Transformator in herkömmlicher Bauweise. Durch den Einsatz von kernorientierten Trafomodulen kann der Frequenzbereich bis ca. 2000 Hz oder mehr erweitert werden, da die maximale Frequenz in erster Linie durch die Verluste bestimmt ist. Damit könnte eine Gewichtseinsparung von 25 % einhergehen. Der Einsatz noch höherer Frequenzen, z.B. 20 kHz, ist bei Einsatz spezieller Trafokerne, beispielsweise Ferritkerne, erreichbar.

Neben den "normalen" Schalt- und Steuervorgängen gibt es verschiedene Störfälle, wie Lastabwurf (Lichtbogenabriß) oder Kurzschluß an den Zuleitungen, bei denen der Wechselrichter (7) nicht beschädigt werden darf. Die Überwachungs- und Kompensationsschaltung (11) ist dafür vorgesehen, den Wechselrichter (7) für die restliche Ablaufzeit des Prozesses ohne Beschädigung abzuschalten.

Die Schweißstromquelle (1) kann auch beim Schutzgasschweißen eingesetzt werden. Hierfür sind etwas andere Kennlinien erforderlich, wie sie in Fig. 4 bis 6 angegeben sind. Um auf die gleiche Regeltiefe wie beim Schweißen mit magnetisch bewegtem Lichtbogen zu kommen, wird auch ein anderer Frequenzbereich benötigt. Die Kennlinien sind auf Konstant-Spannung ausgelegt. Mit der Schweißstromquelle (1) kann zusätzlich zur Frequenzmodulation eine Pulsbreiten-Modulation durchgeführt werden, die die Kennlinien in der Höhe verschiebt. Über die Frequenzmodulation wird die Neigung der Kennlinien, d.h. die Steifheit, eingestellt. Die Pulsbreitenmodulation geschieht ebenfalls im Wechselrichter (7) unter Beaufschlagung durch die Steuerung (6).

Für manche Anwendungsfälle muß die Schweißstromquelle (1) am Ausgang (2) einen pulsierenden gleichgerichteten Schweißstrom zur Verfügung stellen. Dieser besteht aus einem Grundstromanteil, dem zeitweise Impulse mit höherer Amplitude überlagert sind. Ein solches Pulsverhalten kann primärseitig durch die schnell schaltende Steuerung (6) erzeugt werden. Dies kann durch Frequenzmodulation und Beeinflussung des Ausgangsstroms oder durch Pulsbreitenmodulation und Beeinflussung der Ausgangsspannung oder durch eine Mischform beider Techniken geschehen. Darüberhinaus ergibt sich die Möglichkeit, ein Pulsverhalten in an sich bekannter Weise, beispielsweise mit einer zusätzlichen sekundärseitigen Schaltung nach der DE-OS 31 13 671, zu erzeugen.

Der Pulsbetrieb verlangt nach einem besonders steifen Konstant-Spannungs-Verhalten. Der Spannungsabfall U/I liegt dann beispielsweise bei 1 V/100 A entsprechend Fig. 4.

Fig. 5 gibt die erforderliche Kennlinie für das MIG/MAG-Schweißen wieder, bei dem in der Regel ausgangsseitig nicht gepulst wird. Die Kennlinien sollten hierfür weicher sein, wobei der relative Spannungsabfall U/I bei ca. 3 bis 6 V/100 A liegt.

Wie Fig. 6 darstellt, kann die gezeigte Schweißstromquelle (1) beide Kenn-Verhalten kombinieren. Durch die Pulsbreitenmodulation werden die einzelnen Kennlinien in der Höhe verschoben. Mittels der Frequenzmodulation kann der relative Spannungsabfall U/I eingestellt und verändert werden. Die Kennlinien können dadurch eine variable Neigung erhalten und an die jeweiligen Schweißerfordernisse optimal angepaßt werden.

## Patentansprüche

1. Verfahren zur Steuerung einer Stromquelle (1), insbesondere einer Schweißstromquelle, wobei die Höhe des Ausgangsstroms des Transformators (8) durch eine primärseitige Frequenzmodulation der Eingangsspannung auf den oder die gewünschten Wert(e) eingestellt oder verändert wird.

2. Verfahren nach Anspruch 1, dadurch **gekennzeichnet**, daß die Frequenz der Eingangsspannung stufenlos moduliert wird.

3. Verfahren nach Anspruch 1 oder 2, dadurch **gekennzeichnet**,daß die Frequenz der Eingangsspannung in einem Bereich zwischen 50-2000 Hz moduliert wird.

4. Verfahren nach Anspruch 1, 2 oder 3, dadurch **gekennzeichnet**,daß zusätzlich die Pulsbreite der Eingangsspannung moduliert wird.

5. Verfahren nach einem oder mehreren der Ansprüche 1 bis 4, dadurch **gekennzeichnet**, daß der Netzstrom gleichgerichtet und durch einen steuerbaren Wechselrichter (7) wieder in Wechselstrom umgewandelt wird, wobei durch Steuerung des Wechselrichters (7) die Frequenz und gegebenenfalls zusätzlich die Pulsbreite moduliert wird.

6. Stromquelle, insbesondere Schweißstromquelle (1), mit einem Transformator (8) und einer Vorrichtung zur Steuerung seines Ausgangsstroms, welche einen steuerbarer Umrichter (21) aufweist, der dem Transformator (8) vorgeschaltet und mit einer Steuerung (6) zur Frequenzmodulation der Eingangsspannung des Transformators (8) verbunden ist, wobei die Höhe des Ausgangsstroms über die Frequenz der Eingangsspannung einstellbar ist.

7. Stromquelle nach Anspruch 6, dadurch **gekennzeichnet**, daß der Umrichter (21) einen Gleichrichter (5) und einen steuerbaren Wechselrichter (7) aufweist.

8. Stromquelle nach Anspruch 7, dadurch **gekennzeichnet**, daß der Wechselrichter (7) als Transistorschalter ausgebildet ist.

9. Stromquelle nach Anspruch 6, 7 oder 8, dadurch **gekennzeichnet**, daß die Steuerung (6) eine Überwachungs- und Kompensationsschaltung (11) aufweist.

10. Stromquelle nach einem oder mehreren der Ansprüche 6 bis 9, dadurch **gekennzeichnet**, daß die Steuerung (6) einen Microprozessor (12) aufweist.

11. Stromquelle nach einem oder mehreren der Ansprüche 6 bis 10, dadurch **gekennzeichnet**, daß die Steuerung (6) der Stromquelle (1) einen Programmspeicher (13) aufweist und/oder mit einer übergeordneten Prozeßsteuerung (14) verbunden ist.

## Claims

1. Method for the control of a current source (1), especially a welding current source, the level of the output current of the transformer (8) being varied or adjusted to the desired value(s) by a primary-side frequency modulation of the input voltage.

2. Method as claimed in claim 1, **characterised** in that the frequency of the input voltage is steplessly modulated.

3. Method as claimed in claim 1 or 2, **characterised** in that the frequency of the input voltage is modulated in a range between 50 - 2,000 Hz.

4. Method as claimed in claim 1, 2 or 3, **characterised** in that, in addition, the pulse width of the input voltage is modulated.

5. Method as claimed in one or more of claims 1 to 4, **characterised** in that the mains current is rectified and converted back into alternating current by a controllable inverter (7), the frequency and, if need be, also the pulse width being modulated by controlling the inverter (7).

6. Current source, especially welding current source (1), with a transformer (8) and a device for control of its output current, which has a controllable converter (21), which is connected in series to the transformer (8) and connected to a control (6) for the frequency modulation of the input voltage of the transformer (8), the level of the output current being adjustable by way of the frequency of the input voltage.

7. Current source as claimed in claim 6, **characterised** in that the converter (21) has a rectifier (5) and a controllable inverter (7).

8. Current source as claimed in claim 7, **characterised** in that the inverter (7) is designed as transistor switch.

9. Current source as claimed in claim 6, 7 or 8, **characterised** in that the control (6) has a monitoring and compensation circuit (11).

10. Current source as claimed in one or more of claims 6 to 9, **characterised** in that the control (6) has a microprocessor (12).

11. Current source as claimed in one or more of claims 6 to 10, **characterised** in that the control (6) of the current source (1) has a program memory (13) and/or is connected to an overriding process control (14).

## Revendications

1. Procédé pour commander une source de courant (1), notamment une source de courant de soudage, selon lequel on règle sur la ou les valeurs désirées ou on modifie le courant de sortie du transformateur (8) au moyen d'une modulation de la fréquence, exécutée sur le côté primaire, de la tension d'entrée.

2. Procédé selon la revendication 1, caractérisé en ce qu'on module progressivement la fréquence de la tension d'entrée.

3. Procédé selon la revendication 1 ou 2, caractérisé en ce qu'on module la fréquence de la tension d'entrée dans une gamme comprise entre 50 et 2000 Hz.

4. Procédé selon la revendication 1, 2 ou 3, caractérisé en ce qu'on module en supplément la durée des impulsions de la tension d'entrée.

5. Procédé selon une ou plusieurs des revendications 1 à 4, caractérisé en ce qu'on redresse le courant du réseau et qu'on le convertit à nouveau en un courant impulsionnel au moyen d'un onduleur commandable (7), la fréquence et éventuellement aussi la durée des impulsions étant modulées au moyen d'une commande de l'onduleur (7).

6. Source de courant, notamment source de courant de soudage (1), comportant un transformateur (8) et un dispositif pour commander un courant de sortie, qui possède un convertisseur statique commandable (21), qui est branché en amont du transformateur (8) et est relié à une unité de commande (6) servant à moduler la fréquence de la tension d'entrée du transformateur (8), l'intensité du courant de sortie étant réglable au moyen de la fréquence de la tension d'entrée.

7. Source de courant selon la revendication 6, caractérisée en ce que le convertisseur statique (21) comporte un redresseur (5) et un onduleur commandable (7).

8. Source de courant selon la revendication 7, caractérisée en ce que l'onduleur (7) est agencé sous la forme d'un interrupteur à transistor.

9. Source de courant selon la revendication 6, 7 ou 8, caractérisée en ce que l'unité de commande (6) possède un circuit de contrôle et de compensation (11).

10. Source de courant selon une ou plusieurs des revendications 6 à 9, caractérisée en ce que l'unité de commande (6) comporte un microprocesseur (12).

11. Source de courant selon une ou plusieurs des revendications 6 à 10, caractérisée en ce que l'unité de commande (6) de la source de courant (1) comporte une mémoire de programme (13) et/ou est reliée à une unité de commande de processus de rang supérieur (14).
